Europäisches Patentamt

European Patent Office

Office européen des brevets

(19)

(11) Veröffentlichungsnummer: **0 312 559 B1**

(12) **EUROPÄISCHE PATENTSCHRIFT**

(45) Veröffentlichungstag der Patentschrift: **05.12.90**

(51) Int. Cl.⁵: **B 60 J 7/08**

(21) Anmeldenummer: **88903242.1**

(22) Anmeldetag: **10.04.88**

(86) Internationale Anmeldenummer:
**PCT/EP88/00299**

(87) Internationale Veröffentlichungsnummer:
**WO 88/08375 03.11.88 Gazette 88/24**

(54) **SONNENDACH FÜR FAHRZEUGE.**

(30) Priorität: **30.04.87 DE 8706217 u**

(43) Veröffentlichungstag der Anmeldung:
**26.04.89 Patentblatt 89/17**

(45) Bekanntmachung des Hinweises auf die
Patenterteilung:
**05.12.90 Patentblatt 90/49**

(84) Benannte Vertragsstaaten:
**AT BE CH DE FR GB IT LI LU NL SE**

(56) Entgegenhaltungen:
**US-A-4 115 955**
**US-A-4 394 044**
**US-A-4 666 206**

(73) Patentinhaber: **Farmont, Rolf, Dr.**
**Hortensienstrasse 17**
**D-4000 Düsseldorf 30 (DE)**

(72) Erfinder: **Farmont, Rolf, Dr.**
**Hortensienstrasse 17**
**D-4000 Düsseldorf 30 (DE)**

(74) Vertreter: **Schumacher, Horst, Dr. Dipl.-Phys.**
**et al**
**Patentanwälte Dipl.-Phys. Dr. Peter Palgen Dipl.-**
**Phys. Dr. H. Schumacher Frühlingstrasse 43A**
**(Ecke Holunderweg)**
**D-4300 Essen 1 (DE)**

**Beschreibung**

Die Erfindung betrifft ein Sonnendach zum Nachrüsten in eine Dachöffnung eines Fahrzeuges, bei dem die das Sonnendach aufnehmende Dachhaut fahrzeuginnenseitig mit einer eigensteifen, als sogenannter Feststoffhimmel ausgebildeten Verkleidungsschicht verkleidet ist; es besteht zumindest aus einem öffen- und schließbaren, insbesondere schiebbaren oder hinten anhebbaren oder schieb- und hinten anheb- bzw. absenkbaren, mit der Dachhaut im wesentlichen fluchtenden Deckel und einem mehrteiligen, unmittelbar an der Dachhaut festklemmbaren Rahmen, d.h. daß zum Festlegen des Rahmens lediglich die Dachhaut nicht aber andere Teile des Fahrzeugdaches, wie z.B. eine Verkleidung, zwischen Rahmenteilen eingeklemmt wird; dabei besteht der Rahmen erstens aus einem von oben auf die Dachhaut aufsetzbaren, die Dachöffnung umlaufenden einteiligen Außenrahmen und zweitens aus einem mit dem Außenrahmen in einem Bereich innerhalb der Dachöffnung mittels Verbindungs-/Befestigungselementen fest verbindbaren, von unten unmittelbar an der Dachhaut abstützbaren, die Dachöffnung umlaufenden einteiligen Innenrahmen sowie — vorzugsweise — drittens auch aus einem Halteprofil zum Abstützen des sogenannten Feststoffhimmels von unten.

Ein gattungsgemäßes Sonnendach ist unter anderem aus dem DE-Patent DE—C— 32 41 652 bekannt. Bei diesem bekannten Sonnendach stützt sich ein vertikal, d.h. zur Dachhaut etwa senkrecht sich erstreckender Klemmschenkel des Innenrahmens mit seiner relativ kleinen Stirnfläche von unten an der Dachhaut ab und klemmt diese in Verbindung mit dem Außenrahmen ein. Bei diesem bekannten Sonnendach muß zunächst die Dachöffnung aus der Dachhaut des Fahrzeuges herausgeschnitten und nachfolgend im Feststoffhimmel des Fahrzeugdaches eine noch größere Öffnung als die Dachöffnung im Feststoffhimmel hergestellt werden — und zwar derart, daß die Öffnung im Feststoffhimmel bezüglich der Dachöffnung in der Dachhaut umlaufend um einen bestimmten Abstand zurückspringt. Dieser Vorgang des "Zurückschneidens" ist zeitaufwendig und nur von unten her, also in einer ergonomisch ungünstigen Arbeitsposition, vorzunehmen.

Bei anderen auf dem Markt befindlichen Nachrüst-Sonnendächern wird das Zurückschneiden des Feststoffhimmels zwar vermieden, indem in den Feststoffhimmel eine mit der Dachöffnung in der Dachhaut gleichgroße Öffnung hineingeschnitten wird. Dann wird der Dachrahmen aber nicht unmittelbar an der Dachhaut festgeklemmt, sondern der Innenrahmen stützt sich von unten am Feststoffhimmel ab. Die Nachgiebigkeit (Kompressibilität) des Feststoffhimmels führt dazu, daß die an der Dachhaut wirksamen Klemmkräfte relativ gering sind.

Aus der US—A—4 115 955 ist ein Sonnendach bekannt, bei dem die Öffnung im Fahrzeughimmel etwa um den Betrag der Breite des umlaufenden Rahmens kleiner ist als die Öffnung in der Dachhaut. Hierbei handelt es sich um einen dünnen Himmel aus Stoff oder dergleichen, der am Rahmen festgespannt werden muß, da er entsprechend nachgiebig ist. Da bei diesem bekannten Sonnendach die gemeinsam endenden Stoßkanten von unterem Rahmenflansch und Fahrzeughimmel von einem U-förmigen Abdeckprofil mit geringer Schenkellänge verdeckt werden, ist ein sehr genaues Arbeiten beim Herstellen der Öffnung im Fahrzeughimmel erforderlich.

Schließlich ist ein anderes Nachrüst-Sonnendach auf dem Markt erhältlich, bei dem der Rahmen vornehmlich aus einem entsprechend stabilen Formteil aus Leichtmetall besteht, der als Außenrahmen verwendet wird. Dieser Außenrahmen wird mit einer Vielzahl von Klemmstücken verschraubt, welche sich von unten an der Dachhaut unmittelbar abstützen. Wenn bei diesem bekannten Nachrüst-Sonnendach der Feststoffhimmel nicht zurückgeschnitten wird, ist es erforderlich, die Klemmstücke nach dem Einsetzen des Außenrahmens einzeln zwischen die Dachhaut und den Feststoffhimmel zu manövrieren, in die Festschraub-Position zu bringen und nachfolgend festzuschrauben. Dieses Manöver ist kompliziert und entsprechend zeitaufwendig, zumal sich die Löcher für die Schrauben räumlich auf einem relativ hohen Niveau befinden, nämlich etwa auf dem Niveau der oberen, d.h. der der Dachhaut zugewandten Fläche des Feststoffhimmels befinden; entsprechend schwierig ist es, die Schrauben zwischen die Schnittfläche im Feststoffhimmel und dem im übrigen weit nach unten gezogenen Außenrahmen zu manövrieren.

Davon ausgehend liegt der Erfindung die Aufgabe zugrunde, ein gattungsgemäßes Sonnendach zu schaffen, dessen Einbau in das Fahrzeugdach in einfacher Weise möglich ist und das dennoch mit relativ großen Klemmkräften an der Dachhaut des Fahrzeuges festlegbar ist.

Diese Aufgabe wird in einer ersten Alternative erfindungsgemäß dadurch gelöst, daß der Innenrahmen in seinem unter die Dachhaut greifenden Bereich als ein zwischen die Dachhaut und den Feststoffhimmel einschiebbarer Flansch (Klemmflansch) ausgebildet ist, wobei der Feststoffhimmel zumindest entlang einer Kante (Schnittfläche) der Dachöffnung eine mit der Dachöffnung identische Öffnung aufweist. Der einschiebbare Flansch kann umlaufend geschlossen sein, er kann aber auch lediglich an einer, vorzugsweise aber an mehreren Kanten des Rahmens ausgebildet sein oder aus mehreren mit seitlichem Abstand am Rahmen umlaufend angeordneten, sich radial erstreckenden, um eine Achse drehbaren Klemmgliedern, bestehen. Die übrigen Bestandteile des Innenrahmens befinden sich also in dem Bereich innerhalb der Dachöffnung, während lediglich der Flansch als relativ flach gehaltene, bezüglich der Dachhaut im wesentlichen den am höchsten liegenden Teil des Innenrahmens bildende, sich zur Dachhaut im wesentlichen parallel erstreckende Auskragung des Innenrahmens mit seiner flachen Seitenfläche unter die Dachhaut greift.

Eine zweite Alternative löst die Aufgabe erfindungsgemäß da durch, daß der Innenrahmen in seinem unter die Dachhaut greifenden Bereich als ein zwischen die Dachhaut und den Feststoffhimmel einschiebbarer Flansch (Klemmflansch) ausgebildet ist und daß der Innenrahmen zwischen seinem Klemmflansch und den Verbindungs/ Befestigungselementen ein Verbindungsstück aufweist, das zumindest an seiner zum Feststoffhimmel weisenden Seite in Richtung auf den Klemmflansch nach oben und außen geneigt ist. Dadurch wird erreicht, daß die Verbindungs-/ Befestigungselemente zum Verbinden des Außen- und Innenrahmens mit der Dachhaut des Fahrzeuges und zum Aufbringen der Klemmkräfte, wie Schrauben oder schwenkbare Hebel, von unten her leicht zugänglich sind und sich insbesondere in dem am besten zugänglichen Teil des Rahmens, nämlich dem bezüglich des Fahrzeuginnenraumes am tiefsten gelegenen Teil des Rahmens befinden können. Gleiches gilt auch, wenn bei einer erfindungsgemäßen Ausführung nach der ersten Alternative der Innenrahmen zwischen seinem Klemmflansch und den Verbindungs-/Befestigungselementen zur Verbindung mit dem Außenrahmen, also seinem sich innerhalb der Dachöffnung der Dachhaut erstreckenden Teil, ein Verbindungsstück aufweist, das, vorzugsweise, zumindest an seiner zum Feststoffhimmel weisenden Seite in Richtung auf den Klemmflansch nach oben und außen geneigt ist. Während allgemein die verschiedensten bekannten Materialien für die Herstellung des Außen- und Innenrahmens verwendbar sind, wie z.B. Metalle und Kunststoffe, eignen sich die vorerwähnten Lösungen insbesondere für aus Kunststoff hergestellte Innenrahmen, und zwar insbesondere dann, wenn auch der Außenrahmen aus Kunststoff besteht. In diesen Fällen sind der Außen- und der Innenrahmen vorteilhafter Weise umlaufend geschlossen, d.h., daß die umlaufenden Rahmenprofile nicht unterbrochen sind (DE-C-32 46 396).

Durch die Erfindung werden unter anderem folgende Vorteile erzielt:

der Feststoffhimmel braucht zumindest an einer Öffnungskante, vorzugsweise an drei oder sogar allen Öffnungskanten, bezüglich der Öffnung in der Dachhaut nicht mehr zurückgeschnitten zu werden, d.h. daß der Feststoffhimmel, zumindest in Teilbereichen, eine mit der Dachöffnung identische Öffnung aufweist;

alle Arbeiten, wie Blechschneiden, Feststoffhimmelschneiden, Innenrahmen einsetzen und Außenrahmen einsetzen können, ergonomisch günstig, von außen, d.h. von oben her erfolgen;

wenn die Verbindung zwischen dem Außen- und dem Innenrahmen mit schwenkbaren Verriegelungshebeln des Anmelders erfolgt, kann auch dieses Befestigungsmanöver von oben her erfolgen;

lediglich das den Feststoffhimmel von unten abstützende Halteprofil muß, wenn es gemäß einer Weiterbildung der Erfindung als eigenständiger Rahmen oder als eigenständiges Rahmenprofil ausgebildet ist, von unten, d.h. von seiten des Fahrzeuginnenraumes her, eingebaut werden;

die Montagezeit zur Nachrüstung des erfindungsgemäßen Sonnendaches ist bei vollständigem Erhalt der übrigen Vorteile gattungsgemäßer Sonnendächer, wie hohe Dichtigkeit, hohe Festigkeit im Klemmbereich an der Dachhaut sowie ansprechendes Einfassen und Festlegen des Feststoffoder Spannhimmels, erheblich kürzer;

trotz der vorerwähnten Verbesserungen ist es — wie bevorzugt — möglich, sowohl den Innenals auch den Außenrahmen als jeweils einteilige Formteile aus Kunststoff herzustellen.

Besonders bevorzugt wird im Falle der vorerwähnten Verbindungsstücke, daß der dem Verbindungsstück benachbarte Bereich des Außenrahmens sowie das Verbindungsstück an seiner vom Feststoffhimmel fortweisenden Seite in gleicher Weise geneigt ausgebildet sind. Hierdurch kann der in die Dachöffnung hineinragende Bereich des Rahmens mit dem Ergebnis einer möglichst großen freien Öffnungsfläche relativ schmal gehalten werden und ein Abdichtprofil für den plattenförmigen Deckel des Sonnendaches kraft- und platzgünstig angeordnet werden. Wenn sich der Innen- und Außenrahmen an diesen korrespondieren geneigten Flächen im Einbauzustand abstützen können, wirkt dies stabilitätsfördernd.

Wenn, gemäß einer anderen Weiterbildung der Erfindung der Außenund der Innenrahmen korrespondierende Anpreßflächen aufweisen und zwischen dem Außen- und Innenrahmen wirksame Verbindungs-/Befestigungselemente, wie Schrauben, schwenkbare Hebel und dergleichen, zwischen den Anpreßflächen einerseits und dem Klemmbereich für die Dachhaut andererseits angeordnet sind, werden dadurch die Klemmkräfte auf günstige Weise in die Dachhaut einleitbar. Die Wirkung dieser Maßnahme wird noch erhöht, wenn gemäß einer ergänzenden Weiterbildung der Erfindung, der Außen- und der Innenrahmen sich allenfalls im fertig montierten Zustand des Sonnendaches berühren, während sie sich jedenfalls vor dem Betätigen der Verbindungs-/Befestigungselemente im Bereich zwischen den Anpreßflächen einerseits und dem Klemmbereich für die Dachhaut andererseits weder kraft- noch formschlüssig berühren. Diese Lösung eignet sich vor allem für solche Sonnendächer bei denen sowohl der Außen- als auch der Innenrahmen, wie oben beschrieben, aus Kunststoff hergestellt sind.

Die vorgenannten, erfindungsgemäß zu verwendenden Bauteile unterliegen in ihrer Größe, Formgestaltung, Materialauswahl und technischen Konzeptionen keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der zwei bevorzugte Ausführungsformen eines erfindungsgemäßen Sonnendaches dargestellt worden sind. In der Zeichnung zeigen:

Fig. 1 ein erfindungsgemäßes Sonnendach im eingebauten Zustand, in Ansicht von oben (Ansicht A gemäß Figuren 3/4);

Fig. 2 von dem Innenrahmen desselben Sonnendaches eine Ansicht von unten — in der linken Figurenhälfte Ansicht B für das Ausführungsbeispiel gemäß Fig. 3 und in der rechten Figurenhälfte Ansicht C für das Ausführungsbeispiel gemäß Fig. 4;

Fig. 3 von demselben Sonnendach ein Vertikalschnitt durch den Rahmen (Schnitt entlang der Linie III-III gemäß Figuren 1 und 2) bei hinten angehobenem plattenförmigen Deckel;

Fig. 4 von demselben Sonnendach eine alternative Ausführungsform — Schnitt entlang der Linie IV-IV gemäß Figuren 1 und 2 bei dichtend geschlossenem Deckel;

Fig. 5a von einer alternativen Ausführungsform eines Sonnendaches einen Vertikalschnitt durch die vordere Rahmenstrebe — entsprechend einem Schnitt entlang der Linie Va-Va gemäß Fig. 1 (mit geschlossenem Deckel) sowie

Fig. 5b von demselben Sonnendach einen Vertikalschnitt durch die hintere Rahmenstrebe — Schnitt entlang der Linie Vb-Vb gemäß Fig. 1.

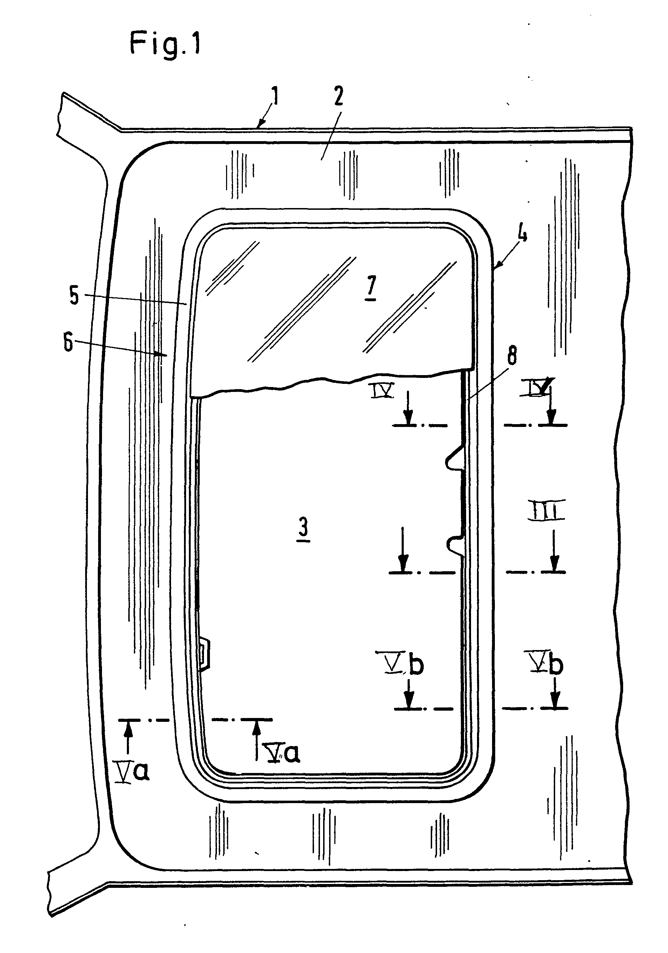

Gemäß Figuren 1 und 3 bis 5b weist die z.B. aus Blech oder aus Kunststoff gebildete Dachhaut 2 eines Fahrzeuges 1 eine Dachöffnung 3 auf in die ein Sonnendach 6 mit hinten hebbarem — oder in anderer Weise verstellbarem — mit der Dachhaut im wesentlichen fluchtenden, plattenförmigen Deckel 7 nachträglich eingebaut ist. In Figur 1 ist vom Rahmen 4 des Sonnendaches 6 lediglich ein umlaufend geschlossener, als Kunststoffformteil ausgebildeter Außenrahmen 5, der Deckel 7 (teilweise entfernt) und eine umlaufende Dichtung 8 erkennbar.

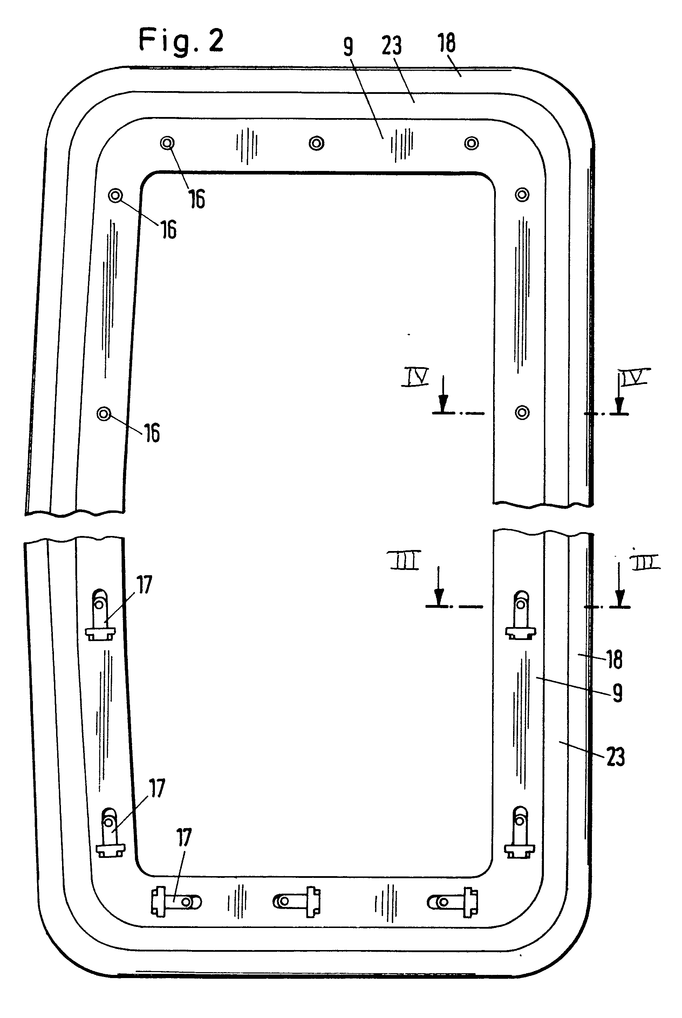

Aus der Ansicht von unten (Fig. 2) ist lediglich der ebenfalls als einstückiges umlaufend geschlossen ausgebildetes Kunststoffformteil hergestellte Innenrahmen 9 in zwei alternativen Ausführungsformen (oben Verschraubung, unten Verriegelung) erkennbar, während der Außenrahmen, das Fahrzeug und die übrigen Bauelemente der Übersichtlichkeit halber fortgelassen sind.

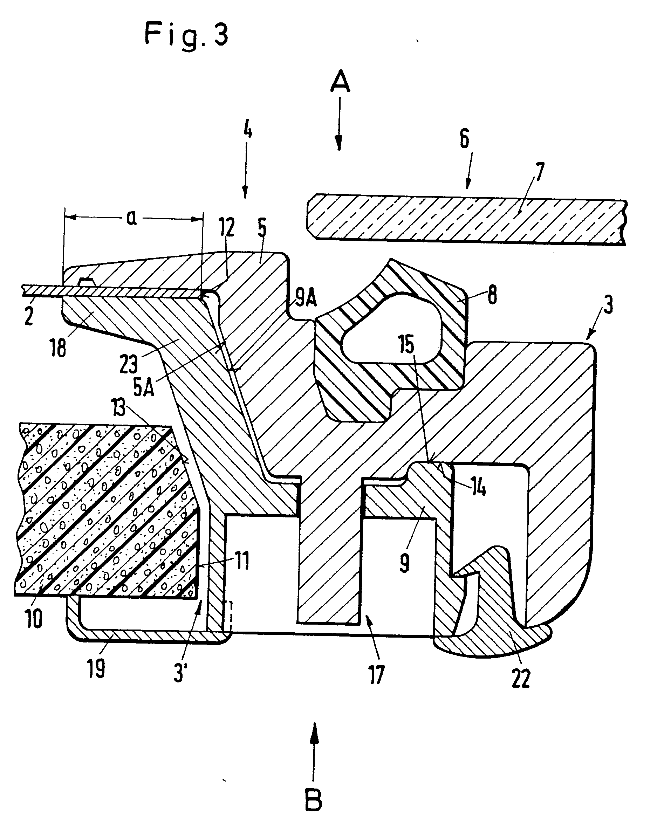

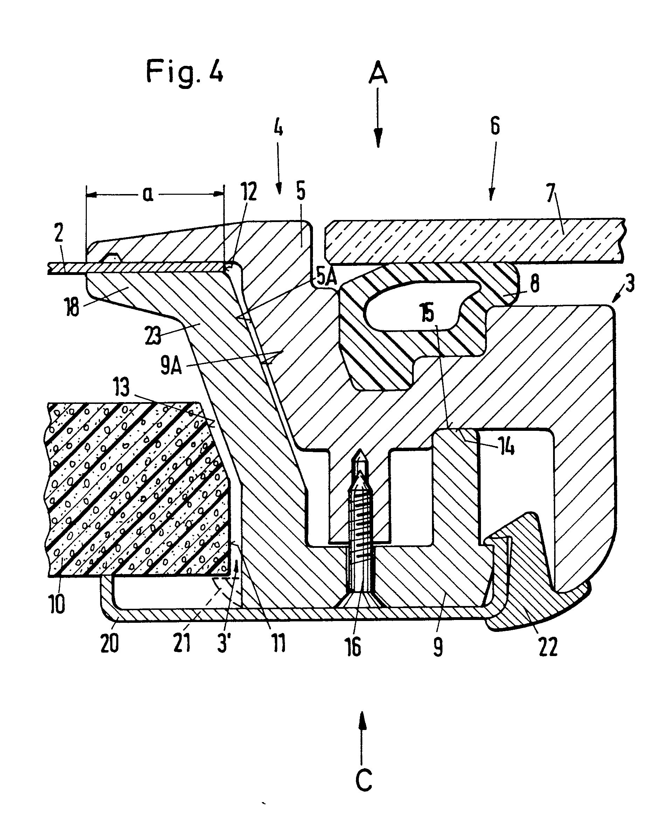

In Figuren 3 und 4 ist eine unterhalb der Dachhaut 2 des Fahrzeuges von der Fahrzeuginnenseite her angeordnete eigensteife Verkleidungsschicht in Form eines sog. Feststoffhimmels 10 erkennbar. Dieser weist eine hinsichtlich seiner Größe und Anordnung mit der Dachöffnung 3 der Dachhaut 2 auf dem gesamten Umfang identische Öffnung 3' auf. Die Schnittflächen 11 und 12 des Feststoffhimmels 10 bzw. der Dachhaut 2 liegen also in etwa einer gemeinsamen sich vertikal erstreckenden Ebene, wobei der Feststoffhimmel 10 in seinem dachhautnahen Bereich eine Hinterschneidung aufweisen kann (Bezugszeichen 13).

Der Außen- und der Innenrahmen 5 und 9 weisen in ihrem innerhalb der Dachöffnung 3, 3' gelegenen Bereich korrespondierende Anpreßflächen 14 und 15 auf, an denen sie (einerseits) beim Festziehen der Verbindungs-/Befestigungselemente, wie der Schrauben 16 (Fig. 4 und Fig. 2 oben) oder der weiter oben erwähnten schwenkbaren Verriegelungsknebel 17 (Fig. 3 und Fig. 2 unten) aufeinanderpreßbar sind. Andererseits klemmen der Außen- und Innenrahmen 5 und 9 in ihrem Klemmbereich a die Dachhaut 2 zwischen sich ein. Zu diesem Zweck ist der Innenrahmen in seinem unter die Dachhaut greifenden Bereich (Klemmbereich a) als flacher etwa dachhautparallel sich erstreckender Flansch 18-ausgebildet, wobei ein schräg nach oben und außen geneigtes Verbindungsstück 23 die Einleitung der Klemmkraft in die Dachhaut verbessert. Dieser Flansch ist zwischen die Dachhaut 2 einerseits und den Feststoffhimmel 10 andererseits auch dann einschiebbar, wenn (wie gewünscht) die Öffnung 3' im Feststoffhimmel 10 gleich groß wie die Dachöffnung 3 der Dachhaut 2 ist.

Dieses Einschieben erfolgt von oben oder von unten her. Der Feststoffhimmel 10 ist kein absolut starres Gebilde und kann, von der Dachhaut 2 fort, um einen gewissen Abstand nach unten heruntergeschoben werden. Der Innenrahmen 9 kann zunächst verkantet in die Dachöffnung 3 oder in Öffnung 3' des Feststoffhimmels 10 in flachem Winkel so eingeschoben werden, daß er zwischen die Dachhaut 2 und den Feststoffhimmel 10 gelangt. Dann wird der Innenrahmen 9 verdreht, bis die Verkantung aufgehoben ist und sich der Innenrahmen in der richtigen Position befindet. Anschließend wird der Außenrahmen 5 von oben in an sich bekannter Weise aufgesetzt und in ebenfalls an sich bekannter Weise mit dem Innenrahmen mittels der erwähnten Verbindungs-/Befestigungselemente unter Erzeugung eines gegenseitigen Anpreßdruckes zwischen beiden Teilrahmen sowie zwischen deren Flanschen im Klemmbereich a an der Dachhaut 2 miteinander verbunden. Sollte bei dem einen oder anderen Fahrzeug ein derartiges Verkanten (Verdrehen) des Innenrahmens nicht möglich sein, werden an zwei gegenüberliegenden Dachöffnungsrändern — nahe einer Rahmenecke — je ein kleiner Ausschnitt im Feststoffhimmel vorgesehen, durch die der Innenrahmen dann zwischen die Dachhaut und den Feststoffhimmel einschiebbar ist.

Die Verbindungs-/Befestigungselemente sind bevorzugt, und wie in Fig. 3 und 4 erkennbar, zwischen dem Klemmbereich a einerseits und den korrespondierenden Anpreßflächen 14 bzw. 15 andererseits angeordnet. Da sich die beiden Teilrahmen in diesem Zwischenbereich vorzugsweise nicht berühren, kann eine (gewünschte) federelastische Verspannung der beiden Teilrahmen durch die Verbindungs-/Befestigungselemente 16 und 17 erzeugt werden.

Ein als eigenständiger Rahmen 19 oder 20 ausgebildetes, den Rahmen 4 außen umlaufendes Halteprofil für die Unterseite des Feststoffhimmels 10 deckt den Rahmen 4 von unten ganz oder teilweise (Figur 4 bzw. Figur 3) ab und ist an dem Rahmen 4, z.B. mittels Rastverbindungen befestigt. — Bei ausreichend elastischen Werkstoffen des Feststoffhimmels, kann ein entsprechend wirkendes Halteprofil 21 aber auch am Innenrahmen 9 integriert sein, das dann aber nur ein kurzes Stück unter den Feststoffhimmel 10 greift (in Fig. 4 gestrichelt dargestellt).

Ein weiteres, an sich bekanntes Klemmprofil 22 kann in eine umlaufende Nut im Außen- und Innenrahmen eingreifen und zum Festlegen eines im Fahrzeug etwa vorhandenen Stoffhimmels, oder aber zum Festklemmen des Rahmens 20 (Figur 4) dienen.

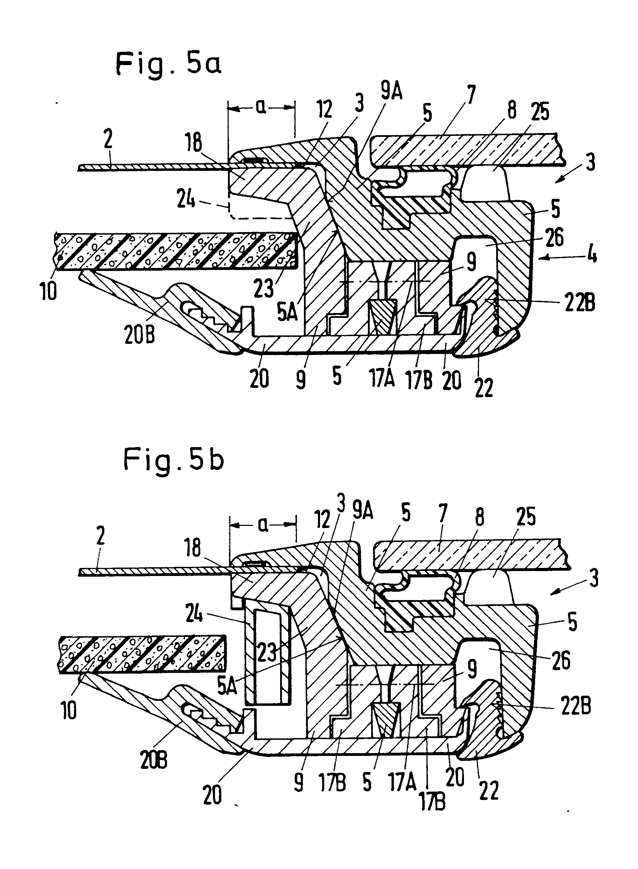

Figuren 5a und 5b zeigen eine alternative Ausführungsform. Bei diesem Ausführungsbeispiel sind die Neigungswinkel, die Länge und die Materialstärke des Verbindungsstückes 23 und des dem Verbindungsstück 23 unmittelbar benachbarten Bereiches des Außenrahmens 5 geändert worden. Die nach außen und oben geneigten benachbarten Flächen 5A und 9A des Außenrahmens 5 bzw. des Innenrahmens 9 berühren sich in dem in den beiden Figuren dargestellten Einbauzustand. Ferner wurde ein um eine Achse 17A verschwenkbarer Verriegelungsknebel 17B als Verbindungs-/Befestigungselement, ein Anschlagelement 25 sowie ein bezüglich des Halteprofils 20 höhenverstellbares Aufsteckprofil 20B verwendet; durch letzteres kann der Feststoffhimmel 10 wahlweise in einer höheren Positionals mit dem Halteprofil 20 allein gehalten werden. Das Halteprofil 20 kann außer mit dem Klemmprofil 22 auch noch an weiteren, in der Zeichnung nicht eigens dargestellten, Stellen mit dem Rahmen 4 rastend verbunden sein; es fällt fort, wenn das Fahrzeugdach statt des Feststoffhimmels einen sogenannten Spannhimmel aus tuchähnlichem Material aufweist, der dann von demselben Klemmprofil 22 in gleicher Weise wie das Halteprofil 20 in der zwischen dem Außen- und dem Innenrahmen gebildeten Innenquerschnitts erweiterten Nut 26 festgelegt wird. Das Klemmprofil 22 weist vorzugsweise Klemmlippen 22B auf.

Der in Figuren 5a und 5b dargestellte Klemmflansch 18 stellt (wie in dem Ausführungsbeispiel gemäß Fig. 3 und 4) wiederum eine am Innenrahmen 9 umlaufend angeordnete, ununterbrochene, flach gehaltene Auskragung dar, die mit dem Innenrahmen 9 einteilig ausgebildet ist. Der Klemmflansch ist also an allen Kanten und Eckbereichen des Rahmens 4 vorhanden. An der in Figur 5b dargestellten Hinterkante des Sonnendaches 6 treten, wie eingehende Untersuchungen gezeigt haben, besonders hohe Belastungen am Rahmen 4 auf. Diese Belastungen rühren zum einen daher, daß in diesem Bereich das Biegemoment der Dachhaut 2, insbesondere in der Nähe der in Fahrtrichtung weisenden Mittellinie geringer ist, als an den übrigen Kanten des Sonnendaches; andererseits greift das in der Zeichnung nicht dargestellte Betätigungselement zum Öffnen und Schließen des Deckels 7 bei vielen Sonnendächern gerade in der Mitte der vorderen und insbesondere der hinteren Sonnendachkante an. Aus diesem Grunde sind vorzugsweise an der vorderen und, besonders bevorzugt und in der Figur 5b dargestellt, an der hinteren Sonnendachkante längliche Verstärkungselemente 24 vorgesehen. Diese erstrecken sich über die gesamte Länge der betreffenden Dachkante oder zumindest aber über den am stärksten biegebelasteten bzw. biegeschwächten Teilbereich. Das Verstärkungselement 24 ist so geformt, daß sein Biegemoment senkrecht zur Dachhaut 2 besonders groß ist. Das Verstärkungselement kann, wie in Figur 5b strichpunktiert angedeutet, von unten gegen den Klemmflansch 18 geschraubt oder in sonstiger Weise mit ihm verbunden sein; das Verstärkungselement kann auch einteilig mit dem Innenrahmen 9 gebildet sein. Bevorzugt ist das Verstärkungselement 24 unmittelbar als Biegeversteifungselement für den Klemmflansch ausgebildet. Wenn der Klemmflansch 18 also in dieser Weise auf einem Teil seiner Länge verstärkt ist und deshalb nicht oder nicht so gut zwischen die Dachhaut 2 und einen Feststoffhimmel 10 einschiebbar ist, wie der in den übrigen Figuren dargestellte Klemmflansch, so liegt diese Lösung immer noch im Rahmen der Erfindung, da der Klemmflansch in den übrigen Bereichen ein Verstärkungselement nicht aufweist. Bei dem in Fig. 5b dargestellten Verstärkungselement 24 muß der Feststoffhimmel 10 in diesem Bereich etwas hinter die Schnittfläche 12 der Dachhaut 2 zurückgeschnitten werden.

Gemäß Fig. 5a kann der Klemmflansch 18, wie gestrichelt dargestellt, wahlweise auch noch dikker ausfallen als im übrigen dargestellt oder es handelte sich bei einer solchen Verdickung um ein Verstärkungselement, das nur in Teilbereichen des Klemmflansches 18 vorgesehen ist, wegen seiner Formgestaltung aber immer noch ein vollständiges Einschieben zwischen der Dachhaut 2 und dem Feststoffhimmel 10 ermöglicht, sofern der Feststoffhimmel 10 nicht allzu dick ist.

Bezugszeichenliste:
1 Fahrzeug.
2 Dachhaut.
3 Dachöffnung.
3' Öffnung.
4 Rahmen.
5 Außenrahmen.
5A geneigte Fläche.
6 Sonnendach.
7 Deckel.
8 Dichtung.
9 Innenrahmen.
9A geneigte Fläche.
10 Feststoffhimmel.
11 Schnittfläche.
12 Schnittfläche.
13 Hinterschneidung.
14 Anspreßfläche.
15 Anpreßfläche.
16 Schrauben.
17 Verriegelungsknebel.
17A Achse.
17B Verriegelungsknebel.
18 Klemmflansch.
19 Rahmen.

20 Rahmen.
20B Aufsteckprofil.
21 Halteprofil.
22 Klemmprofil.
22B Klemmlippen.
23 Verbindungsstück.
24 Verstärkungselement.
25 Anschlagelement
26 Nut.
A Ansicht.
B Ansicht.
C Ansicht.
a Klemmbereich.

**Patentansprüche**

1. Sonnendach zur Nachrüstung in eine Dachöffnung (3) eines Fahrzeuges (1), bei dem die das Sonnendach (6) aufnehmende Dachhaut (2) fahrzeuginnenseitig mit einer eigensteifen, als sogenannter Feststoffhimmel (10) ausgebildeten Verkleidungsschicht verkleidet ist, zumindest bestehend aus
a) einem öffen- und schließbaren mit der Dachhaut im wesentlichen fluchtenden Deckel (7) und
b) einem mehrteiligen, unmittelbar an der Dachhaut (2) festklemmbaren Rahmen (4) mit
b₁) einem von oben auf die Dachhaut (2) aufsetzbaren, die Dachöffnung (3) umlaufenden einteiligen Außenrahmen (5), und
b₂) einem mit dem Außenrahmen (5) in einem Bereich innerhalb der Dachöffnung (3) mittels Verbindungs-/Befestigungselementen (16; 17; 17A; 17B) fest verbindbaren, von unten unmittelbar an der Dachhaut (2) abstützbaren, die Dachöffnungen (3) umlaufenden einteiligen Innenrahmen (9), dadurch gekennzeichnet, daß der Innenrahmen (9) in seinem unter die Dachhaut (2) greifenden Bereich (a) als ein zwischen die Dachhaut (2) und den Feststoffhimmel (10) einschiebbaren Flansch (Klemmflansch 18) ausgebildet ist, wobei der Feststoffhimmel (10) zumindest entlang einer Kante (Schnittfläche 12) der Dachöffnung (3) eine mit der Dachöffnung (3) identische Öffnung (3') aufweist.

2. Sonnendach zur Nachrüstung in eine Dachöffnung (3) eines Fahrzeuges (1), bei dem die das Sonnendach (6) aufnehmende Dachhaut (2) fahrzeuginnenseitig mit einer eigensteifen, als sogenannter Feststoffhimmel (10) ausgebildeten Verkleidungsschicht verkleidet ist, zumindest bestehend aus
a) einem öffen- und schließbaren mit der Dachhaut im wesentlichen fluchtenden Deckel (7) und
b) einem mehrteiligen, unmittelbar an der Dachhaut (2) festklemmbaren Rahmen (4) mit
b₁) einem von oben auf die Dachhaut (2) aufsetzbaren, die Dachöffnung (3) umlaufenden einteiligen Außenrahmen (5), und,
b₂) einem mit dem Außenrahmen (5) in einem Bereich innerhalb der Dachöffnung (3) mittels Verbindungs-/Befestigungselementen (16; 17; 17A; 17B) fest verbindbaren, von unten unmittelbar an der Dachhaut (2) abstützbaren, die Dachöffnungen (3) umlaufenden einteiligen Innenrahmen (9), dadurch gekennzeichnet, daß der Innenrahmen (9) in seinem unter die Dachhaut (2) greifenden Bereich (a) als ein zwischen die Dachhaut (2) und den Feststoffhimmel (10) einschiebbaren Flansch (Klemmflansch 18) ausgebildet ist und daß der Innenrahmen (9) zwischen seinem Klemmflansch (18) und den Verbindungs-/Befestigungselementen (16; 17; 17B) ein Verbindungsstück (23) aufweist, das zumindest an seiner zum Feststoffhimmel (10) weisenden Seite in Richtung auf den Klemmflansch (18) nach oben und außen geneigt ist.

3. Sonnendach nach Anspruch 1, dadurch gekennzeichnet, daß der Innenrahmen (9) zwischen seinem Klemmflansch (18) und den Verbindungs-/Befestigungselementen (16; 17; 178) ein Verbindungsstück (23) aufweist, das zumindest an seiner zum Feststoffhimmel (10) weisenden Seite in Richtung auf den Klemmflansch (18) nach oben und außen geneigt ist.

4. Sonnendach nach Anspruch 2 oder 3, dadurch gekennzeichnet, daß das Verbindungsstück (23) an seiner vom Feststoffhimmel (10) fortweisenden Seite in Richtung auf den Klemmflansch (18) nach oben und außen geneigt ist.

5. Sonnendach nach Anspruch 4, dadurch gekennzeichnet, daß der dem Verbindungsstück (23) benachbarte Bereich des Außenrahmens (5) in gleicher Weise wie das Verbindungsstück (23) an dessen von dem Feststoffhimmel (10) fortweisenden Seite geneigt ist.

6. Sonnendach nach einem der Ansprüche 1 bis 5, dadurch gekennzeichnet, daß der Außen- und der Innenrahmen (5 und 9) korrespondierende Anpreßflächen (14 und 15) aufweisen und daß die zwischen dem Außen- und dem Innenrahmen (5 und 9) wirksame Verbindungs-/Befestigungselemente (16; 17; 17B) zwischen den Anpreßflächen (14 und 15) einerseits und dem Klemmbereich (a) für die Dachhaut (2) andererseits angeordnet sind.

7. Sonnendach nach Anspruch 6, dadurch gekennzeichnet, daß der Außen- und der Innenrahmen (5 und 9) im Bereich zwischen den Anpreßflächen (14 und 15) einerseits und dem Klemmbereich (a) für die Dachhaut (2) andererseits sich allenfalls im fertig montierten Zustand des Sonnendaches (6) berühren.

8. Sonnendach nach einem der Ansprüche 1 bis 7, dadurch gekennzeichnet, daß der Klemmflansch (18) des Innenrahmens (9) aus mehreren mit seitlichem Abstand am Rahmen (4) umlaufend angeordneten und um eine Achse drehbaren Knebeln besteht.

9. Sonnendach nach einem der Ansprüche 1 bis 8, gekennzeichnet durch ein Halteprofil (19; 20; 208; 21) zum Abstützen des Feststoffhimmels (10) von unten, welches, bevorzugt, als eigenständiger Rahmen (19 oder 20) oder als eigenständiges Rahmenprofil ausgebildet ist.

10. Sonnendach nach einem der Ansprüche 1 bis 9, gekennzeichnet durch zumindest ein auf Teilbereiche des Klemmflansches (18) wirkendes Verstärkungselement (24).

11. Sonnendach nach einem der Ansprüche 1 bis 10, dadurch gekennzeichnet, daß der Innenrahmen und der Außenrahmen als jeweils einteilige, umlaufend geschlossene Formteile aus Kunststoff ausgebildet sind.

**Revendications**

1. Toit ouvrant pour montage dans une ouverture du toit (3) d'un véhicule (1), dans lequel la carrosserie (2) soutenant le toit ouvrant (6) est revêtue, du côté intérieur du véhicule, d'une couche d'habillage rigide, dite plafond de matière solide (10), et se composant au moins des éléments suivants:

a) un panneau (7) s'ouvrant et se fermant, en substance aligné avec la carrosserie et

b) un cadre (4), composé de plusieurs parties, directement fixé sur la carrosserie (2) avec

$b_1$) un cadre extérieur (5) d'une seule partie, bordant toute l'ouverture (3) et montable par le haut sur la carrosserie (2), et

$b_2$) Un cadre intérieur (9) d'une seule partie, bordant l'ouverture (3), relié au cadre extérieur (5) dans une zone à l'intérieur de l'ouverture (3) à l'aide d'éléments de raccord et de fixation (16, 17, 17A, 17B), directement soutenu par-dessous par la carrosserie (2), caractérisé en ce que

le cadre intérieur (9) est conçu dans la zone (a), prise sous la carrosserie (2), comme un épaulement rentrant (épaulement de blocage 18) entre la carrosserie (2) et le plafond (10), ce dernier (10) présentant au moins le long d'une arête (surface de coupe 12) de l'ouverture du toit (3) une ouverture (3') identique à l'ouverture du toit (3).

2. Toit ouvrant pour montage dans une ouverture de toit (3) d'un véhicule (1), dans lequel la carrosserie (2) soutenant le toit ouvrant (6) est revêtue, du côté intérieur du véhicule, d'une couche d'habillage rigide, dite plafond de matière solide (10), et se composant au moins des éléments suivants:

a) un panneau (7) s'ouvrant et se fermant, en substance aligné avec la carrosserie et

b) un cadre (4), composé de plusieurs parties, directement fixé sur la carrosserie (2) avec

$b_1$) un cadre extérieur (5) d'une seule partie, bordant toute l'ouverture du toit (3) et montable par le haut sur la carrosserie (2), et

$b_2$) Un cadre intérieur (9) d'une seule partie, bordant l'ouverture (3), relié au cadre extérieur (5) dans une zone à l'intérieur de l'ouverture (3) à l'aide d'éléments de raccord et de fixation (16, 17, 17A, 17B), directement soutenu par-dessous par la carrosserie (2), caractérisé en ce que

le cadre intérieur (9) est conçu dans la zone (a) prise sous la carrosserie (2), comme un épaulement rentrant (épaulement de blocage 18) entre la carrosserie (2) et le plafond (10) et en ce que le cadre intérieur (9) présente, entre son épaulement de blocage (18) et les éléments de raccord et de fixation (16, 17, 17B) une pièce de jonction (23), qui est, au moins sur son côté vers le plafond de matière solide (10) en direction de l'épaulement de blocage (18), en pente vers le haut et vers l'extérieur.

3. Toit ouvrant conformément à la revendication 1, caractérisé en ce que le cadre intérieur (9) présente, entre son épaulement de blocage (18) et les éléments de raccord et de fixation (16, 17, 17B) une pièce de jonction (23), qui est, au moins sur son côté vers le plafond de matière solide (10) en direction de l'épaulement de blocage (18), en pente vers le haut et vers l'extérieur.

4. Toit ouvrant conformément à la revendication 2 ou 3, caractérisé en ce que la pièce de jonction (23) est en pente vers le haut et l'extérieur, sur son côté éloigné du plafond (10), en direction de l'épaulement de blocage (18).

5. Toit ouvrant conformément à la revendication 4, caractérisé en ce que la zone du cadre extérieur (5) voisine de la pièce de jonction (23) est en pente de la même manière que la pièce de jonction (23) sur le côté de celle-ci éloigné du plafond (10).

6. Toit ouvrant conformément à l'une des revendications 1 à 5, caractérisé en ce que, les cadres extérieur et intérieur (5 et 9) présentent des surfaces d'appui (14 et 15) correspondantes et que les éléments de raccord et de fixation (16, 17, 17B) agissant entre les cadres extérieur et intérieur (5 et 9) sont disposés entre d'une part les surfaces d'appui (14 et 15) et d'autre part la zone de blocage (a) pour la carrosserie (2).

7. Toit ouvrant conformément à la revendication 6, caractérisé en ce que les cadres extérieur et intérieur (5 et 9) sont en contact, dans la zone entre les surfaces d'appui (14 et 15) d'une part et la zone de blocage (6) pour la carrosserie (2), à l'état de montage final du toit ouvrant (6).

8. Toit ouvrant conformément à l'une des revendications 1 à 7, caractérisé en ce que l'épaulement de blocage (18) du cadre intérieur (9) se compose de plusieurs éléments tournant autour d'un axe, disposés tout autour du cadre (4), avec un écart latéral.

9. Toit ouvrant conformément à l'une des revendications 1 à 8, caractérisé en ce qu'il comporte un profilé de support (19, 20, 20B, 21) pour soutenir le plafond de matière solide par dessous et qui est conçu, de préférence, comme un cadre (19) ou (20) indépendant du profilé de cadre.

10. Toit ouvrant conformément à l'une des revendications 1 à 9, caractérisé en ce qu'il comporte au moins un élément de renfort (24) dans la zone de l'épaulement de blocage (18).

11. Toit ouvrant conformément à l'une des revendication 1 à 10, caractérisé en ce que le cadre intérieur et le cadre extérieur sont chacun une pièce profilée en matière plastique faite d'une seule partie.

**Claims**

1. Sun roof for subsequent fitting in a roof opening (3) of a vehicle (1), in which the roof skin (2) receiving the sun roof (6) is lined on the inside of the vehicle with an inherently rigid lining layer constructed as a so-called solid inside roof lining (10), at least consisting of

a) a cover (7) which can be opened and closed and aligning substantially with the roof skin and

b) a multi-sectional frame (4) able to be clamped directly to the roof skin (2), with

$b_1$) a one-piece outer frame (5) extending around the roof opening (3) and able to be fitted from above onto the roof skin (2), and

$b_2$) a one-piece inner frame (9) extending around the roof openings (3), able to be connected securely to the outer frame (5) in a region within the roof opening (3) by means of connecting/fastening members (16; 17; 17A; 17B) and able to be supported from below directly against the roof skin (2),

characterised in that in its region (a) engaging below the roof skin (2), the inner frame (9) is constructed as a flange (clamping flange 18) able to be inserted between the roof skin (2) and the solid inside roof lining (10), the solid inside roof lining (10) comprising at least along one edge (cut surface 12) of the roof opening (3), an opening (3') identical to the roof opening (3).

2. Sun roof for subsequent fitting in a roof opening (3) of a vehicle (1), in which the roof skin (2) receiving the sun roof (6) is lined on the inside of the vehicle with an inherently rigid lining layer constructed as a socalled solid inside roof lining (10), consisting at least of

a) a cover (7) which can be opened and closed and aligns substantially with the roof skin and

b) a multi-sectional frame (4) able to be clamped directly to the roof skin (2), with

$b_1$) a one-piece outer frame (5) extending around the roof opening (3) and able to be fitted from above onto the roof skin (2), and

$b_2$) a one-piece inner frame (9) extending around the roof openings (3), able to be connected securely to the outer frame (5) in a region inside the roof opening (3) by means of connecting/fastening members (16; 17; 17A; 17B), able to be supported from below directly against the roof skin (2),

characterised in that in its region (a) engaging below the roof skin (2), the inner frame (9) is constructed as a flange (clamping flange 18) able to be inserted between the roof skin (2) and the solid inside roof lining (10) and that between its clamping flange (18) and the connecting/fastening members (16; 17; 17B), the inner frame (9) comprises a connecting member (23), which at least on its side pointing towards the solid inside roof lining (10) is inclined upwards and outwards in the direction of the clamping flange (18).

3. Sun roof according to Claim 1, characterised in that between its clamping flange (18) and the connecting/fastening members (16; 17; 17B), the inner frame (9) comprises a connecting member (23), which at least on its side pointing towards the solid inside roof lining (10) is inclined upwards and outwards in the direction of the clamping flange (18).

4. Sun roof according to Claim 2 or 3, characterised in that on its side pointing away from the solid inside roof lining (10), the connecting member (23) is inclined upwards and outwards in the direction of the clamping flange (18).

5. Sun roof according to Claim 4, characterised in that the region of the outer frame (5) adjacent the connecting member (23) is inclined in the same way as the connecting member (23) on its side pointing away from the solid inside roof lining (10).

6. Sun roof according to one of Claims 1 to 5, characterised in that the outer and inner frames (5 and 9) comprise corresponding contact surfaces (14 and 15) and that the connecting/fastening members (16; 17; 17B) which are active between the outer and the inner frames (5 and 9) are arranged between the contact surfaces (14 and 15) on one side and the clamping region (a) for the roof skin (2) on the other side.

7. Sun roof according to Claim 6, characterised in that in the region between the contact surfaces (14 and 15) on one side and the clamping region (a) for the roof skin (2) on the other side, the outer and the inner frame (5 and 9) may only come into contact in the final assembled state of the sun roof (6).

8. Sun roof according to one of Claims 1 to 7, characterised in that the clamping flange (18) of the inner frame (9) consists of a plurality of toggles arranged to extend around the frame (4) with a lateral spacing and able to rotate about one axis.

9. Sun roof according to one of Claims 1 to 8, characterised by a retaining section (19; 20; 20B; 21) for supporting the solid inside roof lining (10) from below, which is preferably constructed as an independent frame (19 or 20) or as an independent frame section.

10. Sun roof according to one of Claims 1 to 9, characterised by at least one reinforcing member (24) acting on partial regions of the clamping flange (18).

11. Sun roof according to one of Claims 1 to 10, characterised in that the inner frame and the outer frame are constructed respectively as one-piece shaped parts of synthetic material, which are closed on their periphery.

Fig.1

EP 0 312 559 B1

Fig. 2

2

# Fig.3

# Fig. 4

# Fig. 5a

# Fig. 5b